# EUROPÄISCHE PATENTSCHRIFT

(11) **EP 0 312 693 B1**
(45) Veröffentlichungstag und Bekanntmachung des Hinweises auf die Patenterteilung: **01.09.1993**
(21) Anmeldenummer: 88109409.8
(22) Anmeldetag: 14.06.1988
(51) Int. Cl.: H04K 1/04, H04M 11/06

(54) **Verfahren zur Sprachverschlüsselung mit gleichzeitiger Datenübertragung in schmalbandigen Übertragungssystemen**
Method for speech encryption with simultaneous data transmission in narrow band transmission system
Procédé de chiffrage de la parole avec transmission simultanée de données dans des systèmes de transmission à bande étroite

(30) Priorität: 22.10.1987 DE 3735781
(43) Veröffentlichungstag der Anmeldung: 26.04.1989
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Bauerschmidt, Werner GRUNDIG E.M.V. El.Mech., Kurgartenstrasse 37 D-8510 Fürth/Bay. (DE)

(56) Entgegenhaltungen:
- AU-B- 484 739
- DE-A- 2 004 295
- US-A- 2 426 222

## Beschreibung

Die Erfindung betrifft ein verfahren zur Sprachverschlüsselung mit gleichzeitiger Datenübertragung in schmalbandigen Übertragungssystemen.

Verfahren zur Sprachverschlüsselung an sich sind bekannt. Üblicherweise arbeiten derartige Verfahren mit einem zunächst frequenzverschobenen und dann invertierten Sprachband. Häufig besteht hierbei noch die Möglichkeit, die Versatzfrequenz zyklisch zu verändern bzw. zwischen invertiertem und nicht invertiertem Sprachband in kurzen Zeitabständen umzuschalten. Andere Verfahren zur Nachrichten- oder Sprachverschlüsselung beruhen auf dem Prinzip der Mehrbandverschlüsselung, bei dem das Nachrichtenfrequenzband in einzelne zu vertauschende Teilfrequenzbänder zerlegt wird (vgl. hierzu die Deutsche Patentschrift DE-C-1 196 713 sowie die Deutsche Auslegeschrift DE-B-1 181 749).

Im Zusammenhang mit der Sprachübertragung, jedoch unabhängig von der Sprachverschlüsselung, ist es ferner bekannt, innerhalb eines Spachkanals gleichzeitig mit der Sprache auch noch zusätzliche Daten zu übertragen. Dies kann zum Beispiel durch Modulation eines Hilfsträgers erfolgen (z. B. Frequenzumtastung (FSK) oder Phasenumtastung (PSK)), dessen Frequenz außerhalb des eigentlichen Sprachfrequenzbereichs, jedoch sehr dicht an dessen Grenzen liegt (vgl. z. B. "Lehrbuch der Hochfrequenztechnik II", von Zinke/Brunswig, Springer-Verlag, 2. Auflage).

Nachteilig hierbei ist allerdings, daß zur Vermeidung von Störungen im Sprachband nur sehr kleine Modulationshübe und niedrige Datenraten möglich sind.

Der Erfindung liegt nun die Aufgabe zugrunde, ein Verfahren zur Sprachverschlüsselung mit gleichzeitiger Datenübertragung zu schaffen, durch das für die zusätzlich zur Sprache zu übertragenden Daten eine möglichst hohe Datenrate erzielbar ist, ohne daß hierbei die Sprachübertragungsqualität wesentlich beeinträchtigt wird.

Diese Aufgabe wird gemäß der Erfindung durch die im Kennzeichen des Patentanspruchs angegebenen Maßnahmen gelöst.

Ein besonderer Vorteil des Verfahrens gemäß der Erfindung ist, daß bestimmte Verfahrensschritte, insbesondere die Zerlegung des Sprachfrequenzbandes in Teilfrequenzbänder, sowohl für die Sprachverschlüsselung als auch für die zusätzliche Datenübertragung genutzt werden. Bei dere praktischen Durchführung des Verfahrens kann somit der für die Datenübertragung notwendige technische Aufwand auf ein Minimum beschränkt werden.

Bei dem Verfahren gemäß der Erfindung wird senderseitig das Sprachfrequenzband in mindestens zwei Teilfrequenzbänder zerlegt. Die Teilfrequenzbänder werden anschließend miteinander verwürfelt und wahlweise invertiert oder nicht invertiert. Zur gleichzeitigen Übertragung von zusätzlichen Daten wird senderseitig ferner die Sprachinformation wenigstens eines Teilfrequenzbandes ausgeblendet und durch die zu übertragenden Daten ersetzt. Empfängerseitig werden die Teilfrequenzbänder in entsprechender Umkehrung zur Senderseite wieder invertiert oder nicht invertiert und anschließend entwürfelt. Schließlich werden die für die jeweilige Übertragung von Sprache oder von zusätzlichen Daten benutzten Teilfrequenzbänder selektiv getrennt und separat ausgewertet.

Bei dem Verfahren gemäß der Erfindung wird somit zur Übertragung zusätzlicher Daten ein geeignetes Teilfrequenzband des zur Verfügung stehenden Sprachfrequenzbandes genutzt. Hieraus ergibt sich der Vorteil, daß die zusätzlichen Daten mit einer hohen Datenrate übertragen werden können. Das während der Datenübertragung für die Sprachübertragung nicht mehr zur Verfügung stehende Teilfrequenzband bewirkt im Hinblick auf die Qualität der Sprachübertragung lediglich eine minimale Veränderung der Klangfarbe des wiedergewonnenen Sprachsignals.

## Patentansprüche

1. Verfahren zur Sprachverschlüsselung mit gleichzeitiger Datenübertragung in schmalbandigen Übertragungssystemen, **dadurch gekennzeichnet,** daß senderseitig das Sprachfrequenzband in mindestens zwei Teilfrequenzbänder zerlegt wird, daß die Teilfrequenzbänder miteinander verwürfelt und wahlweise invertiert oder nicht invertiert werden, daß senderseitig ferner zur gleichzeitigen Übertragung von zusätzlichen Daten die Sprachinformation wenigstens eines Teilfrequenzbandes ausgeblendet und durch die zu übertragenden Daten ersetzt wird, daß empfängerseitig die Teilfrequenzbänder in entsprechender Umkehrung zur Senderseite invertiert oder nicht invertiert und entwürfelt werden, und daß die für die jeweilige Übertragung von Sprache oder von zusätzlichen Daten benutzten Teilfrequenzbänder selektiv getrennt und separat ausgewertet werden.

## Claims

1. Method for speech encoding with simultaneous data transmission in narrow-band transmission systems, characterised in that the speech frequency band is split on the transmission side into at least two component frequency bands, in that the component frequency bands are mutually scrambled and optionally inverted or not inverted, in that for the purpose of simultaneous transmission of additional data, the speech information of at least one component frequency band is, moreover, filtered out on the transmission side and replaced by the data to be transmitted, in that on the receiving side the component frequency bands are, in a reversal corresponding to the transmission side, inverted or not inverted and descrambled, and in that the component frequency bands used for the respective transmission of speech or of additional data are selectively separated and separately evaluated.

## Revendications

1. Procédé pour réaliser le codage de signaux vocaux avec transmission simultanée de données dans des systèmes de transmission à bande étroite, caractérisé en ce que, côté émission, la bande des fréquences vocales est subdivisée en au moins deux bandes de fréquences partielles, que les bandes de fréquences partielles sont imbriquées entre elles et au choix sont inversées ou non inversées, que, côté émission, en plus de la transmission simultanée de données supplémentaires, l'information vocale d'au moins une bande de fréquences partielles est occultée et est remplacée par les données devant être transmises, que, côté réception, les bandes de fréquences partielles sont inversées ou non inversées et désimbriquées, conformément à une démarche inverse de celle exécutée côté émission, et que les bandes de fréquences partielles, utilisées pour la transmission respective de signaux vocaux ou de données supplémentaires, sont séparées de façon sélective et évaluées séparément.
